# EUROPEAN PATENT APPLICATION

(11) **EP 4 583 415 A1**
(43) Date of publication of application: **09.07.2025**
(21) Application number: 24221707.3
(22) Date of filing: 19.12.2024
(51) Int. Cl.: H04B 3/54

(54) **COMMUNICATION CONTROL UNIT, CHARGING DEVICE, ELECTRICAL APPLIANCE AND COMMUNICATION CONTROL METHOD THEREOF**

(30) Priority: 05.01.2024 CN 202410022005
(71) Applicant: Techtronic Cordless GP, Anderson, SC 29621 (US)
(72) Inventor: ZHANG, Ye, Dongguan City (CN); WEN, Chao, Dongguan City (CN); MA, Hai Bo, Kwai Chung (HK)
(74) Representative: Meissner Bolte Partnerschaft mbB

(57) **Abstract**

The present disclosure provides a communication control unit for establishing a communication line between an electrical unit and a battery unit, wherein there is an electrical power transmission line between the electrical unit and the battery unit, the communication control unit being configured to: in response to determining that a communication interference occurs between the communication control unit and the electrical unit and/or the battery unit during a period when the electrical unit supplies electrical power to the battery unit or acquires electrical power from the battery unit, switch a first communication protocol currently used for communication between the communication control unit and the electrical unit and/or the battery unit to a second communication protocol, wherein the second communication protocol has a higher anti-interference capability than the first communication protocol. The communication control unit of the present disclosure may switch the communication protocol between the electrical unit and the battery unit according to the interference situation occurring in the system at a proper time, without an additional restart process of the electrical unit and without stopping the operation of the electrical unit, and can significantly improve the charging or discharging efficiency of the electrical unit and the battery unit.

## Description

### FIELD

Embodiments of the present disclosure generally relate to a communication control unit, a charging device, an electrical appliance and a communication control method thereof.

### BACKGROUND

As people have an increasingly high pursuit for convenience in life, various electrical appliances such as a grinder, a cutter and an electrical drill are widely used in daily life and work. Meanwhile, with the increasingly diversified and complicated development of electrical appliances with various functions, the stability of electrical appliances in an operating process and a charging process has become an aspect drawing more attention from people.

For an electrical appliance using a battery, communication between the electrical appliance and the battery usually needs to be performed when the electrical appliance is operated or charged. However, the operating condition or charging environment of the electrical appliance might cause normal communication between the electrical appliance and the battery to be disturbed, thereby causing the power supply of the battery to the electrical appliance to be interrupted or causing the charging of the battery of the power tool by a charging device to be interrupted. Once the power supply to the electrical appliance or the charging of the battery is interrupted, a manual restart is required. However, if the interference factors to the communication still exist after the restart, the power supply to the electrical appliance or the charging of the battery still cannot be restored. Therefore, the stability of use of the electrical appliance will be substantially affected.

### SUMMARY

In general, example embodiments of the present disclosure provide a communication control unit, a charging device, an electrical appliance, and a communication control method thereof.

According to a first aspect, the present disclosure provides a communication control unit for establishing a communication line between an electrical unit and a battery unit, wherein there is an electrical power transmission line between the electrical unit and the battery unit, the communication control unit being configured to: in response to determining that an interference occurs in communication between the communication control unit and the electrical unit and/or the battery unit during a period when the electrical unit supplies electrical power to the battery unit or acquires electrical power from the battery unit, switch a first communication protocol currently used for communication between the communication control unit and the electrical unit and/or the battery unit to a second communication protocol, wherein the second communication protocol has a higher anti-interference capability than the first communication protocol.

The communication control unit of the present disclosure may switch the communication protocol between the electrical unit and the battery unit according to the interference situation occurring in the system at a proper time. Therefore, even if a communication-interfering condition such as harmonics and noise occurs in the electrical power grid, or a communication-interfering factor such as a large current caused by a special operation condition such as an increase of the load occurs when the electrical unit operates, the communication between the electrical unit and the battery unit can still be maintained, so that the charging or discharging operation of the electrical unit needn't be interrupted or stopped, without an additional restart process of the electrical unit and without stopping the operation of the electrical unit. Therefore, the stability of the charging or discharging operation of the electrical unit and the battery unit can be improved, and the charging or discharging efficiency can be significantly improved.

In some embodiments, a communication frequency of the second communication protocol is different from that of the first communication protocol.

In some embodiments, a signal type employed by the first communication protocol is a digital signal, and a signal type employed by the second communication protocol is an analog signal.

In some embodiments, a duration of sampling a sampled signal in the second communication protocol is longer than that in the first communication protocol.

In some embodiments, the sampled signal in the first communication protocol is an instantaneous value, and the sampled signal in the second communication protocol is an average value over a period of time.

In some embodiments, the sampled signal is a voltage signal and/or a current signal regarding the electrical unit supplies electrical power to or acquires electrical power from the battery unit.

In some embodiments, the communication control unit comprises a detection module, a determination module and a switching module; the detection module is configured to detect state parameter information regarding the electrical unit supplying electrical power to the battery unit or acquiring electrical power from the battery unit, and transmit the state parameter information to the determination module; the determination module is configured to determine, based on the received state parameter information, whether the state parameter information complies with a specification in the first communication protocol currently used for communication between the communication control unit and the electrical unit and/or the battery unit, determine that communication interference exists on the communication lines in response to determining that the state parameter information does not comply with the specification, and send corresponding interference indication information to the switching module; the switching module is configured to switch, in response to the received interference indication information, the first communication protocol currently used for communication between the communication control unit and the electrical unit and/or the battery unit to the second communication protocol.

In some embodiments, the determination module is configured to, based on the state parameter information detected by the detection module and related to the electrical unit supplying electrical power to the battery unit or acquiring electrical power from the battery unit, determine a level of interference occurring on the communication lines and to send interference indication information to the switching module, the interference indication information indicating the level of interference; and the switching module is configured to, in response to receiving the interference indication information, switch the first communication protocol currently used for communication between the communication control unit and the electrical unit and/or the battery unit to another communication protocol corresponding to the level of the interference indicated by the interference indication information; wherein the communication protocols corresponding to different levels of interference are different.

In some embodiments, the state parameter information is an electrical signal characterizing a magnitude of a voltage and/or a current regarding the electrical unit supplying electrical power to the battery unit or acquiring electrical power from the battery unit; the detection module comprises a sampling circuit configured to collect the electrical signal and send the electrical signal to the determination module; the determination module is configured to issue the interference indication information to the switching module in response to determining that the electrical signal does not comply with a specification in the first communication protocol currently used for communication between the communication control unit and the electrical unit and/or the battery unit.

In some embodiments, the state parameter information is a value of a first time interval elapsed from a time when the communication control unit issues a first communication instruction to the electrical unit and/or the battery unit to a time when the communication control unit receives information of a response to the first communication instruction from the electrical unit and/or battery unit, or a value of a second time interval elapsed from a time after the communication control unit issues the first communication instruction to the electrical unit and/or the battery unit to a time before the communication control unit receives information of a response to the first communication instruction from the electrical unit and/or battery unit; the detection module comprises a timing circuit configured to record the value of the first time interval and the value of the second time interval, and sends the value of the first time interval and the value of the second time interval to the determination module; the determination module is configured to send the interference indication information to the switching module in response to determining that the value of the first time interval or the value of the second time interval value is greater than a predetermined value.

In some embodiments, the first communication instruction is an instruction issued by the communication control unit to the electrical unit and/or the battery unit to request for acquisition of a state parameter of the electrical unit and/or the battery unit, or an instruction to transmit a charging or discharging-related parameter to the electrical unit and/or the battery unit.

In some embodiments, the determination module is configured to determine, based on the received state parameter information, whether the state parameter information complies with a specification in the first communication protocol corresponding to a current charging phase or discharging phase of the battery unit, and in response to determining that the state parameter information does not comply with the specification, determine that communication interference exists on the communication lines, and send corresponding interference indication information to the switching module.

According to a second aspect, the present disclosure provides a charging device comprising a charging unit and the communication control unit according to any of the above embodiments, wherein the charging unit is configured to provide electrical power to a battery unit connected to the charging device based on one of at least two communication protocols provided by the communication control unit.

According to a third aspect, the present disclosure provides an electrical appliance, comprising a drive control unit and the communication control unit according to any of the preceding embodiments, wherein the drive control unit is configured to acquire electrical power from a battery unit mounted to the electrical appliance based on one of at least two communication protocols provided by the communication control unit.

According to a fourth aspect, the present disclosure provides a battery device comprising a battery unit and the communication control unit according to any of the preceding embodiments, wherein the battery unit is configured to acquire electrical power from a charging device or supplies electrical energy to an electrical appliance based on one of at least two communication protocols provided by the communication control unit.

The present disclosure further provides a communication control method for providing communication between an electrical unit and a battery unit, the method comprising: step 1 (S1): electrically connecting the electrical unit with the battery unit; step 2 (S2): activating a first communication protocol in response to the electrical unit being electrically connected with the battery unit, and performing communication between the electrical unit and the battery unit based on the first communication protocol; step 3 (S3): determining an interference occurs in communication between the communication control unit and the electrical unit and/or the battery unit during a period when the electrical unit supplies electrical power to or acquires electrical power from the battery unit; step 4 (S4): in response to determining that the communication interference occurs, turning off a first communication protocol and activating a second communication protocol, and performing communication between the electrical unit and the battery unit based on the second communication protocol, wherein the second communication protocol has a higher anti-interference capability than the first communication protocol.

It is to be understood that this section is not intended to identify key or important features of the embodiments of the disclosure, nor is it intended to be used to limit the scope of the disclosure. Other features of the present disclosure will become readily apparent from the following description.

### BRIEF DESCRIPTION OF THE DRAWINGS

The above and other advantages, features and objects of the present disclosure will become more apparent from the following more detailed description of some embodiments of the disclosure with reference to the following figures, wherein:
FIG. 1 illustrates a schematic block diagram of an operation manner of a communication control unit according to one embodiment of the present disclosure;
FIG. 2 illustrates a schematic diagram of components of a communication control unit according to one embodiment of the present disclosure;
FIG.3 illustrates a schematic block diagram of an operation manner of a communication control unit according to another embodiment of the present disclosure;
FIG.4 illustrates a schematic block diagram of an operation manner of a communication control unit according to a further embodiment of the present disclosure;
FIG.5 illustrates a schematic block diagram of an operation manner of a communication control unit according to a further embodiment of the present disclosure;
FIG. 6 illustrates a schematic flow chart of a communication control method according to a further embodiment of the present disclosure;

Throughout the drawings, the same or like reference numerals denote the same or like elements.

### DETAILED DESCRIPTION OF EMBODIMENTS

The principles of the present disclosure will now be described with reference to some example embodiments. It may be appreciated that these examples are described only to illustrate and help those skilled in the art to understand and implement the present disclosure, and are not intended to suggest any limitation as to the scope of the disclosure. The content of the present disclosure described herein may be implemented in various ways other than those described below.

As used herein, the term "include" and variations thereof are to be construed as openended terms and mean "include, but not limited to." The term "based on" may be understood as "based at least in part on". The term "one embodiment" may be understood as "at least one embodiment". The term "another embodiment" may be understood as "at least one other embodiment". Moreover, in the context of the present disclosure, the terms "information", "signal", and "data" may be used interchangeably for ease of discussion. Other explicit and implicit definitions are included below.

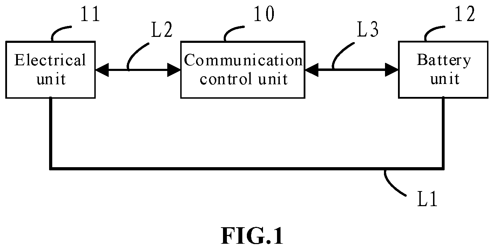

FIG. 1 illustrates a schematic block diagram of an operation manner of a communication control unit according to one embodiment of the present disclosure. The communication control unit 10 serves to establish communication between an electrical unit 11 and a battery unit 12. The communication control unit 10 is configured to switch a first communication protocol used when communication is currently performed between the communication control unit 10 and the electrical unit 11 and/or the battery unit 12, to a second communication protocol in response to determining that a communication interference occurs between the communication control unit 10 and the electrical unit 11 and/or the battery unit 12 during a period when the electrical unit 11 provides electrical power to the battery unit 12 or acquires electrical power from the battery unit 12, wherein an interference immunity of the second communication protocol is higher than that of the first communication protocol.

An electrical power transmission line L1 is disposed between the electrical unit 11 and the battery unit 12 to realize electrical power transmission between the electrical unit 11 and the battery unit 12. A direction of electrical power transmission may be from the electrical unit 11 to the battery unit 12. For example, in a case where the electrical unit 11 is a charging module of a charging device, electrical power will be transmitted from the electrical unit 11 to the battery unit 12 through the electrical power transmission line L1 to charge the battery unit 12. The direction of the electrical power transmission may also be from the battery unit 12 to the electrical unit 11. For example, in a case where the electrical unit 11 is a drive or control unit of a power tool, electrical power will be transmitted from the battery unit 12 to the electrical unit 11 through the power transmission line L1 to power the electrical unit 11. The specific direction of the power transmission between the electrical unit 11 and the battery unit 12 is determined according to a specific use scenario of the system, or according to a potential difference between the electrical unit 11 and the battery unit 12.

The communication control unit 10 is disposed between the electrical unit 11 and the battery unit 12 to provide a communication circuit between the electrical unit 11 and the battery unit 12. As shown in FIG. 1, a communication transmission line L2 is disposed between the communication control unit 10 and the electrical unit 11 for one-way or two-way communication between the communication control unit 10 and the electrical unit 11. The communication control unit 10 may issue a request for obtaining a state parameter of the electrical unit 11 to the electrical unit 11 through the communication transmission line L2, or receive the state parameters related to the electrical unit 11 from the electrical unit 11 through the communication transmission line L2, or transmit an instruction regarding charging or discharging to the electrical unit 11 through the communication transmission line L2. A communication transmission line L3 is disposed between the communication control unit 10 and the battery unit 12 for one-way or two-way communication between the communication control unit 10 and the battery unit 12. The communication control unit 10 may issue a request for obtaining a state parameter of the battery unit 12 to the battery unit 12 through the communication transmission line L3, or receive the state parameter regarding the battery unit 12 from the battery unit 12 through the communication transmission line L3, or transmit an instruction regarding charging or discharging to the battery unit 12 through the communication transmission line L3.

In a default state, after the electrical unit 11 and the battery unit 12 are electrically connected, the communication control unit 10 performs communication handshaking and subsequent communication actions with the electrical unit 11 and/or the battery unit 12 via the communication transmission line L2 and the communication transmission line L3 according to the first communication protocol. The first communication protocol may specify communication-related information such as a transmission mode of a communication signal, a communication frequency, and a data format of communication.

In one embodiment, parameters of the electrical power transmission between the electrical unit 11 and the battery unit 12 may also be associated with the first communication protocol. For example, the first communication protocol may specify values of voltage and current supplied by the electrical unit 11 to the battery unit 12, or specify values of the voltage and current supplied by the battery unit 12 to the electrical unit 11. Therefore, when the communication control unit 10 communicates with the electrical unit 11 and/or the battery unit 12 according to the first communication protocol, the electrical unit 11 and the battery unit 12 will perform charging or discharging according to the voltage value and the current value specified by the first communication protocol.

In a process of charging from the electrical unit 11 to the battery unit 12, electrical power anomalies such as harmonics and surges often occur in an electrical utility system connected to the electrical unit 11, and battery anomalies such as over-voltage, over-current and high-temperature also occur in the battery unit 12. These anomalous conditions might interfere with the communication between the electrical unit 11 and the battery unit 12. Additionally, during operation of the electrical unit 11 (e.g., a motor unit in a power tool), anomalous operating conditions might also occur (e.g., an excessive motor load causes overcurrent, high temperature, undervoltage etc. of the battery unit 12). This situation might also interfere with communication between the electrical unit 11 and the battery unit 12.

In response to the aforementioned communication interference, the communication control unit 10 switches the communication protocol used in the communication between the electrical unit 11 and the battery unit 12 according to the interference occurring in the communication circuit to select a communication protocol with better anti-interference performance for communication. In a case where the electrical power transmission parameter is associated with the communication protocol, after the communication protocol is switched to another communication protocol, the electrical power transmission between the electrical unit 11 and the battery unit 12 is also performed according to the electrical power transmission parameter specified in the another communication protocol.

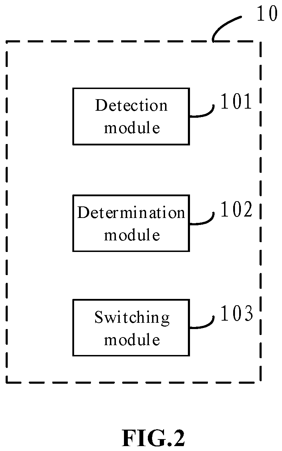

FIG. 2 illustrates a schematic diagram of components of the communication control unit 10. In one embodiment, the communication control unit 10 comprises a detection module 101, a determination module 102 and a switching module 103. The detection module 101 is configured to detect state parameter information regarding the electrical unit 11 supplying electrical power to the battery unit 12 or acquiring electrical power from the battery unit 12, and transmit the detected state parameter information to the determination module 102. The determination module 102 is configured to determine, based on the state parameter information detected by the detection module 101, whether the state parameter information complies with a specification in the first communication protocol currently used for communication between the communication control unit 10 and the electrical unit 11 and/or the battery unit 12, determine that communication interference exists on the communication lines L2, L3 in response to determining that the state parameter information does not comply with the specification in the first communication protocol, and send corresponding interference indication information to the switching module 103. After receiving the interference indication information, the switching module 103 switches the communication protocol currently used between the communication control unit 10 and the electrical unit 11 and/or the battery unit 12 to another communication protocol with stronger anti-interference capability, for example, switches the first communication protocol to the second communication protocol. The second communication protocol is more suitable for the current communication interference condition, so that the communication between the electrical unit 11 and the battery unit 12 can continue to be maintained under the current communication interference environment, and thus the electrical unit 11 and the battery unit 12 can continue to perform stable discharging or charging operation action.

In one embodiment, the detection module 101 is configured to detect state parameter information regarding the electrical unit 11 supplying electrical power to the battery unit 12 or acquiring electrical power from the battery unit 12, and may detect the state parameters of the electrical unit 11 and/or the battery unit 12, or detect the state parameters regarding the charging or discharging process of the electrical unit 11 and/or the battery unit 12. The state parameters of the electrical unit 11 and/or the battery unit 12 are, for example, an electrical signal charactering a temperature level of the electrical unit 11 or the battery unit 12, an electrical signal characterizing a current voltage or charge level of the battery unit 12, a parameter characterizing an electrical power output capability or an allowable electrical power input range of the electrical unit 11 and/or the battery unit 12, etc. The state parameters regarding the charging or discharging process of the electrical unit 11 and/or the battery unit 12 are, for example, an electrical signal characterizing a magnitude of a voltage and/or a current regarding the electrical unit 11 supplying electrical power to the battery unit 12 or acquiring electrical power from the battery unit 12, a time interval between a time when the communication control unit 10 sends a communication instruction data packet to the electrical unit 11 and/or the battery unit 12 and a time when the communication control unit 10 receives a response information data packet from the electrical unit 11 and/or the battery unit 12, whether a length, identifier or the like of a data frame transmitted between the communication control unit 10 and the electrical unit 11 and/or the battery unit 12 is correct, whether the communication handshake between the communication control unit 10 and the electrical unit 11 and/or the battery unit 12 is normal, etc.

In an embodiment, the detection module 101 sends the collected state parameter information to the determination module 102, and the determination module 102, in response to the received state parameter information, determines whether the received state parameter information complies with the specification in a communication protocol currently used for communication between the communication control unit 10 and the electrical unit 11 and/or the battery unit 12, and further determines whether communication interference occurs between the communication control unit 10 and the electrical unit 11 and/or the battery unit 12. When whether the state parameter information complies with the specification in the current communication protocol is determined, various determination manners can be employed. For example, the state parameters may be directly compared with predetermined values of relevant parameters specified in the specification in the communication protocol, or the obtained state parameters, after being processed or calculated accordingly, may be compared with the predetermined values of the relevant parameters specified in the specification in the communication protocol. In addition, it is also possible to obtain a plurality of determination thresholds after performing processing or calculation according to the predetermined values of a plurality of relevant parameters in the specification of the communication protocol, and then to compare the state parameter or the state parameter, after being processed or calculated accordingly, with the plurality of determination thresholds. It is also possible to determine whether a corresponding event occurs according to a certain event flag bit specified in the specification of the communication protocol. Whether the received state parameter information complies with the specifications in the current communication protocol is determined in different ways as needed, thereby determining whether the communication interference exists on the communication lines L2, L3.

In the whole charging or discharging process of the battery unit 12, the communication control unit 10 may be configured to always provide the communication protocol used when communicating with the electrical unit 11 and/or the battery unit 12. In one embodiment, the determination module 102 is configured to determine, based on the received state parameter information, whether the state parameter information complies with the specification in the first communication protocol corresponding to the charging phase or discharging phase the battery unit 12 is currently in, and in response to determining that the state parameter information does not comply with the specification, to determine that the communication interference exists on the communication lines L2, L3, and to send corresponding interference indication information to the switching module 103.

In the whole charging or discharging process of the battery unit 12, the voltage or power level of the battery unit 12 varies with the charging time or discharging time. In general, for different types of batteries, in order to ensure battery safety and improve battery lifetime, or to adapt to different designs of chargers, etc., the whole charging process of the battery unit 12 involves multiple charging phases such as a pre-charging phase, a fast charging phase and a trickle charging phase, and the switching between different charging phases; the whole discharge process of the battery unit 12 may also involve multiple discharge phases such as constant current discharge, constant resistance discharge and constant power discharge, as well as the switching between different discharge phases. The specification in the communication protocol provided by the communication control unit 10 for communication with the electrical unit 11 and/or the battery unit 12 in different charging phases or different discharging phases of the battery unit 12 may differ depending on the different charging and discharging phases. In one embodiment, the determining module 102 is configured to determine, based on the received state parameter information, whether the state parameter information complies with the specification in the first communication protocol corresponding to the charging phase or discharging phase where the battery unit 12 is currently in; in a case where the state parameter information does not comply with the specification, the determining module 102 determines that a communication interference exists on the communication lines L2, L3 and sends corresponding interference indication information to the switching module 103 for the switching module 103 to perform a relevant communication protocol switching action. In the present disclosure, different specifications or protocol parameters of the specifications are set in the communication protocol used upon communication between the electrical unit 11 and/or the battery unit 12 to correspond to different charging phases or different discharging phases of the battery unit 12, so that the communication between the electrical unit 11 and the battery unit 12 is more adaptable to different interference conditions occurring in the system when the battery unit 12 is in different phases, thereby improving the stability of the charging or discharging operation of the electrical unit 11 and battery unit 12.

In one embodiment, the detection module 101 comprises a sampling circuit. The sampling circuit is configured to collect state parameter information regarding the electrical unit 11 supplying electrical power to the battery unit 12 or acquiring electrical power from the battery unit 12. In one embodiment, the sampling circuit collects an electrical signal of a magnitude of a voltage and/or current regarding the electrical unit 11 supplying electrical power to the battery unit 12 or acquiring electrical power from the battery unit 12. The detection module 101 sends the sampled electrical signal to the determination module 102. The determination module 102 compares a value of the electrical signal with a threshold to determine whether a communication interference exists in the communication lines L2, L3. The threshold is specified in, or determined based on, the specification in the first communication protocol used when communication is currently performed between the communication control unit 10 and the electrical unit 11 and/or the battery unit 12. If the value of the sampled electrical signal (or a value obtained after processing based on the electrical signal) does not exceed the threshold, the determination module 102 considers that the electrical signal complies with the specifications in the first communication protocol, determines that no communication interference exists in the communication lines L2, L3 (or a degree of communication interference is acceptable), and does not send the interference indication information to the switching module 103. At this time, the switching module 103 does not switch the communication protocol. If the value of the sampled electrical signal (or the value obtained after processing based on the electrical signal) exceeds the threshold, the determination module 102 considers that the electrical signal does not comply with the specifications in the first communication protocol, determines that a communication interference exists in the communication lines L2, L3, and sends the interference indication information to the switching module 103. At this time, the switching module 103 switches the first communication protocol currently used upon communication in the communication lines L2, L3 to the second communication protocol, so that the electric unit 11 continues to communicate with the battery unit 12 according to the switched second communication protocol.

The above threshold for determining whether the communication interference exists may be set on the basis of a signal value of a magnitude of a normal voltage and/or current on the electrical power transmission line L1 in the absence of the communication interference, a parameter value of a normal state of the electrical unit 11 or the battery unit 12, and a degree of tolerance of the system to the communication interference, and on the basis of the specifications in the currently-used communication protocol.

By way of example, in a normal case, in the process of the electrical unit 11 supplies the electrical power to the battery unit 12 or acquires the electrical power from the battery unit through the electrical power transmission line L1 according to the first communication protocol, the sampling circuit collects to obtain a voltage signal V1 regarding the electrical unit 11 supplying the electrical power to the battery unit 12 or acquiring the electrical power from the battery unit 12, and the detection module 101 sends the voltage signal value V1 in the form of an analogue signal to the determination module 102. Upon receiving this signal value, the determination module 102 compares the signal value with a voltage threshold V0 determined based on the specifications of the currently-used communication protocol. After the comparison, in a case where the voltage signal value V1 is less than the threshold V0, the determination module 102 considers that the voltage signal value V1 complies with the specification in the first communication protocol, and determines that the system is in a normal state without performing the action of switching the communication protocol; therefore, at this time, the determination module 102 does not send the interference indication information to the switching module 103.

In one embodiment, assuming that at the beginning of a time, an interference occurs in the electrical power network electrically connected with the electrical unit 11 or an anomaly occurs in the operating state of the electrical unit 11, the sampling circuit collects a voltage signal V2 regarding the electrical unit 11 supplying the electrical power to the battery unit 12 or acquiring the electrical power from the battery unit 12 in the event of the interference or anomaly. The detection module 101 sends a voltage signal value V2 in the form of an analogue signal to the determination module 102. Upon receiving this signal value, the determination module 102 compares the signal value with a voltage threshold V0 determined based on the specifications of the currently-used communication protocol. After the comparison, in a case where the voltage signal value V2 is greater than the threshold V0, the determination module 102 considers that the voltage signal value V2 does not comply with the specification in the first communication protocol, and determines that the communication interference has occurred in the system and an action of switching the communication protocol needs to be performed, and therefore the determination module 102 sends interference indication information to the switching module 103 at this time. After receiving the interference indication information, the switching module 103, in response to receiving the interference indication information, switches the communication protocol currently used for communication between the electrical unit 11 and the battery unit 12, namely, the first communication protocol, to the second communication protocol. Thus, after the communication control unit 10 performs a communication handshake between the electrical unit 11 and/or the battery unit 12 according to the second communication protocol, the charging unit 11 supplies the electrical power to the battery unit 12 or acquires electrical power from the battery unit 12 according to the second communication protocol.

In one embodiment, a specific amplitude value of the voltage threshold V0 may be set flexibly according to the magnitude of the interference on the electrical power transmission line L1, the value of the state parameter of the electrical unit 11 or the battery unit 12, or the degree of tolerance of the system to the communication interference, and the amplitude value of the threshold V0 may also be adjusted adaptively according to different operating conditions of the system under different operating conditions. In one embodiment, the voltage threshold may also be a voltage value interval, and the determining module compares by determining whether the collected voltage signal is within the voltage value interval. For example, when the voltage signal collected by the sampling circuit is within the voltage value interval, the determination module considers that the collected voltage signal complies with the specification in the current communication protocol; when the voltage signal collected by the sampling circuit is outside the voltage value interval, or the determination module cannot identify the collected voltage signal, the determination module considers that the collected voltage signal does not comply with the specifications in the current communication protocol, determines that communication interference has occurred in the system, and then performs subsequent actions such as sending the interference indication information and switching the protocol.

In some embodiments, a time of sampling a sampled signal in the second communication protocol is longer than that in the first communication protocol. Thus, when communication interference occurs in the system, the second communication protocol is more reliable than the first communication protocol, so that the operation of the entire system is more stable. In one embodiment, the sampled signal in the first communication protocol is an instantaneous value, and the sampled signal in the second communication protocol is a corresponding value obtained after data processing based on a plurality of instantaneous values. For example, the corresponding value is an average value of a plurality of instantaneous values over a period of time. In another embodiment, the sampled signal in both the first communication protocol and the second communication protocol is an average value of a plurality of instantaneous values over a period of time, and a sampling period of the sampled signal in the second communication protocol is longer than that in the first communication protocol.

In one embodiment, the sampled signal is a voltage signal and/or a current signal regarding the electrical unit 11 supplying electrical power to the battery unit 12 or acquiring electrical power from the battery unit 12. In one embodiment, an example is taken in which the sampled signal is a voltage signal regarding the electrical unit 11 supplying electrical power to the battery unit 12 or acquiring electrical power from the battery unit 12. The voltage signal V1 or V2 collected by the sampling circuit may be an instantaneous voltage value collected by the sampling circuit at a specific certain time point, or may also be a corresponding value obtained after data processing based on the instantaneous voltage value. In one embodiment, the voltage signal V1 or V2 is a voltage average value of a plurality of instantaneous values collected by the sampling circuit during a certain time period, and the collected voltage average value during the certain time period is sent to the determination module 102 for determination, thereby reducing the influence of the instantaneous interference on the communication control unit 10 to a certain extent.

In one embodiment, the detection module 101 may also convert the sampled voltage signal into a digital signal form and send the converted voltage in the digital signal form to the determination module 102. The determination module 102 may decide whether to receive the digital signal based on whether the digital signal sent by the detection module 101 meets specific data requirements. In one embodiment, if the digital signal sent by the detection module 101 is 1, the determination module 102 receives the digital signal and considers that the digital signal complies with the specifications in the communication protocol, and further determines that the system is in a normal state without need to perform the action of switching the communication protocol, and thus the determination module 102 does not send interference indication information to the switching module 103 at this time. In one embodiment, if the digital signal sent by the detection module 101 is 0, the determination module 102 does not receive the digital signal, and then determines that the communication interferences has occurred in the system, and an action of switching the communication protocol needs to be performed, whereupon the determination module 102 sends the interference indication information to the switching module 103.

In one embodiment, the determination module 102 may also receive a specific bit in the digital signal and determine whether communication interference has occurred based on whether the specific bit in the received digital signal complies with the specifications in the communication protocol. In one embodiment, the specific bit in the voltage in the form of the digital signal may be a 1-bit or multi-bit check bit, and the determination module 102 may check the check bit of the voltage in the form of the digital signal by setting a corresponding 1-bit or multi-bit check code. In one embodiment, when the system is in a normal operation state, the determination module 102 successfully checks the check bit of the voltage in the form of the digital signal via the check code, and then the determination module 102 receives the voltage in the form of the digital signal and considers that the voltage complies with the specification in the first communication protocol, and further determines that the system is in a normal state without performing an action of switching the communication protocol, and thus the determination module 102 does not send the interference indication information to the switching module 103 at this time. In one embodiment, after an anomaly begins to occur in the system at a time, the determination module 102 unsuccessfully checks the check bit of the voltage in the form of the digital signal via the check code, the determination module 102 does not receive the voltage in the form of the digital signal and considers that the voltage value does not comply with the specification in the first communication protocol, and further determines that the communication interface has occurred in the system and an action of switching the communication protocol needs to be performed, whereupon the determination module 102 sends the interference indication information to the switching module 103.

The communication interference that occurs between the communication control unit 10 and the electrical unit 11 and/or the battery unit 12 during the period when the electrical unit 11 supplies electrical power to the battery unit 12 or acquires electrical power from the battery unit 12 might be caused by the following abnormal factors: for example, common forms in the electrical power network such as an instantaneous voltage with higher voltage value in the electrical power network, and a voltage harmonic with a higher frequency; for example, the electromagnetic interference generated by the external environment to the electrical power network or the electrical unit 11; again for example, an instantaneous large current generated by the high load encountered in the operation of the power tool; as a further example, an excessive temperature of the battery unit 12.

As a result of occurrence of any one or more of the above-mentioned anomalies, the communication interference will occur on the communication lines L2 and/or L3, and at this time: it is possible that a time interval between a time when the communication control unit 10 sends a communication instruction data packet to the electrical unit 11 and/or the battery unit 12 and a time when the communication control unit 10 receives a response information data packet from the electrical unit 11 and/or the battery unit 12 is too long, or an error occurs in the length of the data frame of the state parameter information transmitted between the communication control unit 10 and the electrical unit 11 and/or the battery unit 12, or an error occurs in a flag portion, etc. As long as the state parameter information transmitted between the communication control unit 10 and the electrical unit 11 and/or the battery unit 12 does not comply with the specifications in the communication protocol currently used for communication between the communication control unit 10 and the electrical unit 11 and/or the battery unit 12, the communication interference of the present disclosure may be considered to have occurred. The present disclosure is not limited in this regard.

In one embodiment, the determination module 102 may also determine that the communication interference has occurred by taking, as a determination criterion, a duration of a state in which the value of the sampled electrical signal exceeds a threshold for a predetermined duration, and in this case send interference indication information to the switching module 103. In one embodiment, the detection module 101 may comprise a timing circuit configured to calculate information about a communication time of the communication between the communication control unit 10 and the electrical unit 11 and/or the battery unit 12. Exemplarily, the timing circuit is configured to record an elapsed time interval from a time when the communication control unit 10 issues a first communication instruction to the electrical unit 11 and/or the battery unit 12 to a time when the communication control unit 10 receives information about a response to the first communication instruction from the electrical unit 11 and/or the battery unit 12. The detection module 101 sends time interval information to the determination module 102. The determination module 102 compares the time interval information with a predetermined duration T1. In one embodiment, when the time interval is greater than a predetermined duration T1, the determination module 102 considers that the time interval information does not comply with the specification in the current first communication protocol, and determines that normal communication between the electrical unit 11 and the battery unit 12 has been affected by interference occurring in the electrical power network or an anomaly occurring in the operating object, and the communication protocol used needs to be reconfigured to send interference indication information to the switching module 103 to notify the switching module 103 to switch the communication protocol. As another example, the timing circuit may also be configured to record an elapsed time interval from a time at which the communication control unit 10 issues the first communication instruction to the electrical unit 11 and/or the battery unit 12, and time-keeping is constantly performed since this time until the communication control unit 10 receives information about a response to the first communication instruction from the electrical unit 11 and/or the battery unit 12, and to send constantly-kept time duration information to the determination module 102. The determination module 102 compares the constantly-kept time duration with a predetermined duration T2. In one embodiment, in a case where the constantly-kept time duration is longer than the predetermined duration T2, the determination module 102 considers that the time interval information does not comply with the specification in the current first communication protocol, and determines that normal communication between the electrical unit 11 and the battery unit 12 has been affected by interference occurring in the electrical power network or an anomaly occurring in the operating object, and the communication protocol used needs to be reconfigured to send interference indication information to the switching module 103 to notify the switching module 103 to switch the communication protocol. The predetermined duration T1 or the predetermined duration T2 is specified in the specification in the first communication protocol used when communication is currently performed between the communication control unit 10 and the electrical unit 11 and/or the battery unit 12, or determined based on the specification.

The aforementioned first communication instruction referred to by the timing circuit upon starting to keep time may be an instruction sent by the communication control unit 10 to the electrical unit 11 and/or the battery unit 12 to request for acquisition of a state parameter of the electrical unit 11 and/or the battery unit 12, or an instruction to transmit a charging or discharging-related parameter to the electrical unit 11 and/or the battery unit 12, or other instructions sent by the communication control unit 10 to the electrical unit 11 and/or the battery unit 12, as long as the electrical unit 11 and/or the battery unit 12 should feed back a response message to the communication control unit 10 in time after receiving the instruction in a normal state.

The second communication protocol may be employed for communication using a signal type identical with or different from the first communication protocol, and any suitable communication interface and communication frequency, and may have a greater anti-interference capability than the first communication protocol. Exemplarily, in one embodiment, the signal type employed by the first communication protocol is a digital signal and the signal type employed by the second communication protocol is an analog signal. In another embodiment, the communication frequency of the second communication protocol is different from that of the first communication protocol. For example, the communication frequency of the second communication protocol is lower than that of the first communication protocol. As a result, when the first communication protocol is switched to the second communication protocol, the second communication protocol is used to perform communication between the electrical unit 11 and the battery unit 12, and the anti-interference capability thereof is improved.

It may be appreciated that the second communication protocol is a communication protocol different from the first communication protocol. In one embodiment, normally, communication between the current communication control unit 10 and the electrical unit 11 and/or the battery unit 12 is performed using the first communication protocol. When an anomaly occurs, the detection module 101 detects the state parameter information regarding the electrical unit 11 supplying electrical power to the battery unit 12 or acquiring electrical power from the battery unit 12 and sends the state parameter information to the determination module 102. The determination module 102 determines that the state parameter information does not comply with the specification in the currently-used first communication protocol, and sends corresponding interference indication information to the switching module 103. The switching module 103 receives the interference indication information and switches the first communication protocol currently used between the communication control unit 10 and the electrical unit 11 and/or the battery unit 12 into the second communication protocol.

After the switching action is completed, the second communication protocol might or might not adapt to the current anomalous situation. In one embodiment, the detection module 101 in the communication control unit 10 may be configured to always detect the state parameter information regarding the electrical unit 11 supplying electrical power to or acquiring electrical power from the battery unit 12. Accordingly, the determination module 102 may be configured to always determine, based on the state parameter information detected by the detection module 101, whether the received state parameter information complies with the specification in the new communication protocol, i.e., the second communication protocol after the switching. In the present embodiment, if the determination module 102 considers that the state parameter information complies with the specifications in the second communication protocol, communication is performed between the communication control unit 10 and the electrical unit 11 and/or the battery unit 12 using the second communication protocol, and accordingly electrical power transmission for charging or discharging is performed between the electrical unit 11 and/or the battery unit 12 according to the second communication protocol, i.e., the second communication protocol after the switching can adapt to the current anomalous situation. However, if the determination module 102 determines that the state parameter information does not comply with the specification in the second communication protocol based on the relevant state parameter information detected by the detection module 101, the determination module 102 considers that communication interference still exists on the communication lines L2 and L3, which indicates that the second communication protocol still cannot adapt to the current anomalous situation. At this time, the determination module 102 may still send the interference indication information to the switching module 103. After receiving the interference indication information, the switching module 103 performs a switching action of the communication protocol again, switches the second communication protocol to a third communication protocol, a fourth communication protocol, and so on, until the determination module 102 considers that the detected state parameter information complies with the specification in the communication protocol after the switching. Thus, the latest communication protocol after the switching by the switching module 103 may adapt to the current anomalous situation, whereupon the electrical power transmission for charging or discharging can be performed between the electrical unit 11 and/or the battery unit 12 according to the latest communication protocol which can adapt to the current anomalous situation.

By providing a plurality of different communication protocols, the present disclosure enables the communication protocol to adapt to a more complex and broader range of anomalous situations. Therefore, regarding different communication interference situations, the present disclosure can give thoughts to the anti-interference capability and the communication efficiency, as well as the charging or discharging efficiency of the electrical unit and battery unit.

Under the communication protocol provided by the communication control unit 10 of the present disclosure, the communication control unit 10 may switch the communication protocol between the electrical unit 11 and the battery unit 12 according to the interference situation occurring in the system at a proper time. Therefore, in the operation process of the electrical unit 11 charging the battery unit 12 normally or acquiring electrical power from the battery unit 12 normally, even if a communication-interfering condition such as harmonics and noise occurs in the electrical power grid, or a communication-interfering factor such as a large current caused by a special operation condition such as an increase of the load occurs when the electrical unit 11 operates, the communication between the electrical unit 11 and the battery unit 12 can still be maintained, so that the charging or discharging operation of the electrical unit 11 needn't be interrupted or stopped. The electrical unit 11 can still continue to supply electrical power to the battery unit 12 or to acquire electrical power from the battery unit 12, without an additional restart process of the electrical unit 11 and without stopping the operation of the electrical unit 11. Therefore, the technical solution of the present disclosure can improve the stability of the charging or discharging operation of the electrical unit 11 and the battery unit 12, and can significantly improve the charging or discharging efficiency.

In the electrical power transmission and electrical power distribution, the interference caused by the electrical power grid has large randomness, e.g., is not exactly the same in terms of the interference duration and interference magnitude. However, the difference in special operation conditions faced by the electrical unit 11 is also large, and therefore the degree of resultant influence on the communication interference is also different. In order to further increase the flexibility of the solution of the present disclosure and further improve the operating efficiency, in one embodiment, the determination module 102 is configured to, based on the state parameter information detected by the detection module 101 and related to the electrical unit 11 supplying electrical power to the battery unit 12 or acquiring electrical power from the battery unit 12, determine a level of interference occurring on the communication lines L2, L3 and to send interference indication information to the switching module 103. The interference indication information indicates the level of the interference. In response to receiving the interference indication information, the switching module 103 is configured to switch the first communication protocol currently used for communication between the communication control unit 10 and the electrical unit 11 and/or the battery unit 12 to another communication protocol corresponding to the level of the interference indicated by the interference indication information. The communication protocols corresponding to different levels of interference are different.

In one embodiment, the determination module 102 sets at least a first threshold and a second threshold. When a relevant value detected by the detection module 101 is smaller than the first threshold, the determination module 102 determines that no communication interference occurs on the communication lines L2, L3. When the relevant value detected by the detecting module 101 is greater than the first threshold and less than the second threshold, the determination module 102 determines that a first-level communication interference corresponding to the first threshold occurs on the communication lines L2, L3. When the relevant value detected by the detection module 101 is greater than the second threshold, the determination module 102 determines that a second-level communication interference corresponding to the second threshold occurs on the communication lines L2, L3. An interference intensity of the second-level communication interference is greater than that of the first-level communication interference. Thus, for example, a communication protocol such as a third communication protocol resulting from the switching by the switching module 103 after receiving the second-level communication interference should be different from the second communication protocol resulting from the switching by the switching module 103 after receiving the first-level communication interference. For example, the anti-interference capability of the third communication protocol should be higher than that of the second communication protocol to suit the second-level communication interference having a relatively greater interference intensity. The first threshold and/or the second threshold are/is specified in or determined based on a specification in the communication protocol used when communication is currently performed between the communication control unit 10 and the electrical unit 11 and/or the battery unit 12.

By providing the indication of multiple levels of interference degrees and accordingly providing different communication protocols, it is possible to provide a more appropriate communication protocol for different communication interference situations, thereby considering the anti-interference capability of the communication as well as the communication efficiency (as well as charging or discharging efficiency of the electrical unit and the battery unit).

It needs to be appreciated that after the first communication protocol is switched to the second communication protocol, the communication control unit 10 may continue to detect and determine the communication interference situation on the communication lines L2, L3; furthermore, in a case of determining that the communication interference on the communication lines L2, L3 is weakened or eliminated, the determination module 102 in the communication control unit 10 again instructs the switching module 103 to switch the second communication protocol used in the current communication back to the first communication protocol. In addition, in embodiments where the determination module 102 is capable of providing interference level information, after the switching of the communication protocol is performed once, the communication control unit 10 may continue to detect and determine the communication interference situation on the communication lines L2, L3, and the determination module 102 in the communication control unit 10 may again instruct the switching module 103 to switch the communication protocol used in the current communication to a communication protocol corresponding to a higher interference level or a communication protocol corresponding to a lower interference level in case it is determined that the communication interference level on the communication lines L2, L3 rises or falls.

In one embodiment, the actions of the communication control unit 10 detecting the state parameter information, determining communication interference on the communication lines L2, L3, and switching the communication protocol in the above embodiments may be repeatedly performed constantly during the whole charging phase or discharging phase of the battery unit 12 so that the communication interference may be found at any time during the charging phase or discharging phase and the communication protocol may be switched accordingly in time. The whole charge phase includes, but is not limited to, a pre-charge phase, a fast charge phase, a trickle charge phase, etc. in the process that the electrical unit 11 supplies the electrical power to the battery unit 12. The whole discharging phase includes, but is not limited to, a constant current discharge, a constant resistance discharge, a constant power discharge, etc. of the battery unit 12 in the process that the electrical unit 11 acquires electrical power from the battery unit 12.

The electrical unit 11 in the present disclosure may be, for example, a part of an electrical appliance such as a power tool to acquire electrical power from the battery unit 12, or may be a part of a charging device such as a charger to supply electrical power to the battery unit 12. The type of the electrical unit 11 is not limited in the present disclosure. If the electrical unit 11 is apart in the electrical appliance, the electrical appliance may further have a housing, a driving motor disposed in the housing, a switch for controlling the operating state of the driving motor, and a receiving space for connecting or receiving the battery unit 12 etc. At this time, the battery unit 12 supplies operating power to the electrical appliance 11. If the electrical unit 11 is a part in the charging device, the charging device may further have a casing, an electrical energy converting member disposed in the casing, a switch for controlling activation and deactivation of the electrical energy converting member, and a receiving space for connecting or receiving the battery unit 12, etc. At this time, the charging device supplies the operating electrical power to the battery unit 12 to charge the battery unit 12. The battery unit 12 is used for electrically connecting with the electrical appliance 11 or the charging device 11, and the type of the battery may be any type such as a lithium ion battery, a lithium battery, a nickel hydride battery; the battery may be located in the battery receiving space of the electrical appliance 11 or the charging device 11, or may be external to the electrical appliance 11 or the charging unit 11.

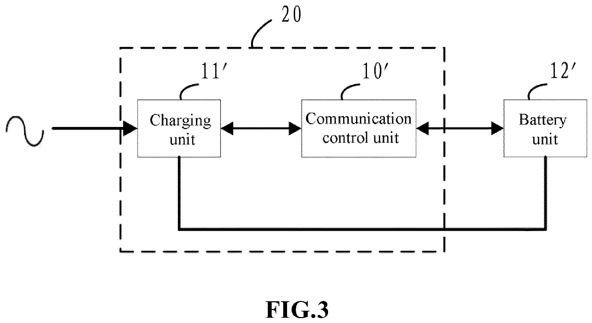

FIG. 3 illustrates a schematic block diagram of an operation manner of a communication control unit 10 according to an embodiment of the present disclosure. In one embodiment, the electrical unit 11 is a part in the charging device 20 (charging unit 11'). The charging device 20 comprises a charging unit 11' and a communication control unit 10', and communicates with the battery unit 12' based on one of at least two communication protocols provided by the communication control unit 10'. The communication protocol for communication between the charging device 20 and the battery unit 12' is a charging communication protocol. The charging device 20 supplies electrical power to the battery unit 12' according to a charging communication protocol provided by the communication control unit 10'.

The charging unit 11' supplies electrical power to the battery unit 12' according to the communication protocol between the charging unit 11' and the battery unit 12' provided by the communication control unit 10', and modes in which the charging unit 11' supplies electrical power to the battery unit 12' are different according to different communication protocols provided by the communication control unit 10'. The communication control unit 10' may detect a change in a state parameter regarding the charging unit 11' supplying power to the battery unit 12', thereby switching to an appropriate communication protocol.

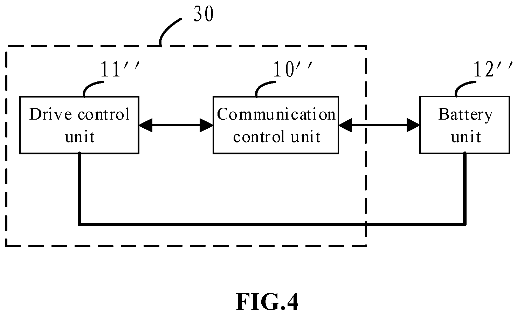

FIG. 4 illustrates a schematic block diagram of an operation manner of a communication control unit 10 according to another embodiment of the present disclosure. In this embodiment, the electrical unit 11 may be a part of an electrical appliance such as a power tool 30, for example, a drive control unit 11" that drives and controls the operation of the power tool 30. The communication control unit 10" is used to provide communication between the drive control unit 11" and the battery unit 12". The drive control unit 11" is configured to acquire electrical energy from the battery unit 12". In the power tool 30 such as a cutter, a drill, the drive control unit 11" may achieve the control and regulation of the motor by controlling a power devices. The drive control unit 11" acquires electrical power from the battery unit 12" according to a communication protocol between the communication control unit 10" and the drive control unit 11" and/or the battery unit 12" provided by the communication control unit 10", and modes in which the drive control unit 11" acquires electrical power from the battery unit 12" are different according to different communication protocols provided by the communication control unit 10". The communication control unit 10" may detect a change in a state parameter regarding the drive control unit 11" acquiring electrical power from the battery unit 12', thereby switching to an appropriate communication protocol.

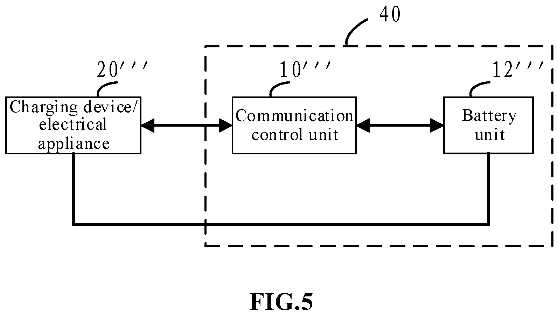

FIG. 5 illustrates a schematic block diagram of an operation manner of a communication control unit according to a further embodiment of the present disclosure. The battery device 40 is configured to acquire electrical power from a charging device 20‴ or supply electrical power to a power tool 20‴ based on one of at least two communication protocols provided by a communication control unit 10'". In the embodiment of FIG. 5, the communication control unit 10‴ and the battery unit 12‴ are both disposed in a housing of the battery device 40, as exemplarily shown by a dashed box. The charging device 20‴ provides electrical power to the battery unit 12" or the power tool 20‴ acquires electrical power from the battery unit 12" according to the communication protocol between the communication control unit 10‴ and the charging device 20"'/power tool 20‴ and/or the battery unit 12‴ provided by the communication control unit 10'", and modes in which the charging device 20‴ supplies electrical power to the battery unit 12" or the power tool 20‴ acquires electrical power from the battery unit 12" are different according to different communication protocols provided by the communication control unit 10'". The communication control unit 10‴ may detect a change in a state parameter regarding the charging device 20‴ supplying electrical power to the battery unit 12" or the power tool 20‴ acquiring electrical power from the battery unit 12", thereby switching to an appropriate communication protocol.

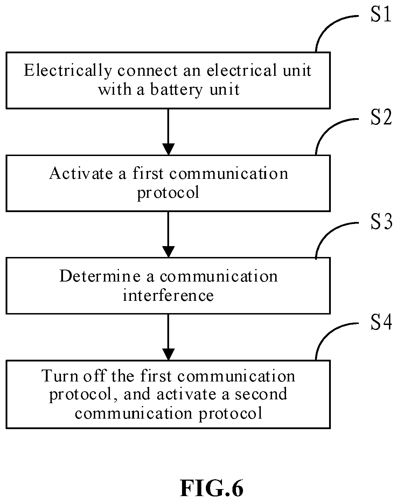

FIG. 6 illustrates a schematic flow chart of a communication control method according to a further embodiment of the present disclosure, for providing communication between an electrical unit and a battery unit. The method comprises step S1: electrically connecting the electrical unit with the battery unit; step S2: activating a first communication protocol in response to the electrical unit being electrically connected with the battery unit, and performing communication between the electrical unit and the battery unit based on the first communication protocol; step S3: determining a communication interference occurs between the communication control unit and the electrical unit and/or the battery unit during a period when the electrical unit supplies electrical power to or acquires electrical power from the battery unit; step S4: in response to determining that the communication interference, turning off a first communication protocol and activating a second communication protocol, and performing communication between the electrical unit and the battery unit based on the second communication protocol, wherein the second communication protocol has a higher anti-interference capability than the first communication protocol.

The communication control unit or the communication control method of the present disclosure may be applied to any scenario or system requiring a communication handshake between the electrical device and the battery device, not limited to the scenario in which the charging unit charges the battery unit, and may also be applied to a scenario in which the battery device supplies electrical power to other electrical appliances such as a grinder, a cutter, an electrical drill, etc.

Generally, various embodiments of the present disclosure may be implemented by hardware, specific circuit, software, logic or any combination thereof. Some aspects may be implemented by hardware, and some other aspects may be implemented by firmware or software that may be executed by a controller, a microprocessor, or other computing device. Although various aspects of the present disclosure will be shown and described as block diagrams, flow charts or some other graphical representations; however, it may be understood that the blocks, devices, systems, technologies or methods described herein may be implemented in a non-limiting manner by hardware, software, firmware, specific circuit or logic, general hardware or controller or other computing device or a combination of some thereof.

Additionally, although the operations are described in a specific sequence, it should not be understood that these operations are required to be executed in the shown sequence or sequentially, or that all shown operations are required to be executed to achieve a desired outcome. In some cases, the multi-task or parallel processing may be advantageous. Similarly, although details based on the preferred embodiments are included in the above discussion, these should not be construed as any limitation to the scope of the present disclosure, while description of features is only for specific embodiments. Some features described in some separate embodiments may also be executed in combination in a single embodiment. In turn, various features described in a single embodiment may also be separately implemented in a plurality of embodiments or implemented in any appropriate sub-combination.

Although the present disclosure is described by using specific structural features and/or method actions, it may be understood that the present disclosure defined in the appended claims is not necessarily limited to the specific features or actions. The specific features and actions are only disclosed as examples for implementing the claims.

## Claims

1. A communication control unit (10, 10', 10", 10‴) for establishing a communication line (L2, L3) between an electrical unit (11, 11', 11", 11‴) and a battery unit (12, 12', 12", 12‴), wherein there is an electrical power transmission line (L1) between the electrical unit (11, 11', 11", 11‴) and the battery unit (12, 12', 12", 12‴), the communication control unit (10, 10', 10", 10‴) being configured to:
in response to determining that a communication interference occurs between the communication control unit (10, 10', 10", 10‴) and the electrical unit (11, 11', 11", 11‴) and/or the battery unit (12, 12', 12", 12‴) during a period when the electrical unit (11, 11', 11", 11‴) supplies electrical power to the battery unit (12, 12', 12", 12‴) or acquires electrical power from the battery unit (12, 12', 12", 12‴), switch a first communication protocol currently used for communication between the communication control unit (10, 10', 10", 10‴) and the electrical unit (11, 11', 11", 11‴) and/or the battery unit (12, 12', 12", 12‴) to a second communication protocol, wherein the second communication protocol has a higher anti-interference capability than the first communication protocol.

2. The communication control unit (10, 10', 10", 10‴) according to claim 1, wherein a communication frequency of the second communication protocol is different from that of the first communication protocol.

3. The communication control unit (10, 10', 10", 10‴) according to either claim 1 or claim 2, wherein a signal type employed by the first communication protocol is a digital signal, and a signal type employed by the second communication protocol is an analog signal.

4. The communication control unit (10, 10', 10", 10‴) according to any one of claims 1 to 3, wherein a duration of sampling a sampled signal in the second communication protocol is longer than that in the first communication protocol.

5. The communication control unit (10, 10', 10", 10‴) according to any one of claims 1 to 4, in particular claim 4, wherein the sampled signal in the first communication protocol is an instantaneous value, and the sampled signal in the second communication protocol is an average value over a period of time.

6. The communication control unit (10, 10', 10", 10‴) according to claim 4 or 5, wherein the sampled signal is a voltage signal and/or a current signal regarding the electrical unit (11, 11, 11", 11 ‴) supplies electrical power to or acquires electrical power from the battery unit (12, 12', 12", 12‴).

7. The communication control unit (10, 10', 10", 10‴) according to any one of claims 1 to 6, wherein
the communication control unit (10, 10', 10", 10‴) comprises a detection module (101), a determination module (102) and a switching module (103);
the detection module (101) is configured to detect state parameter information regarding the electrical unit (11, 11', 11", 11‴) supplying electrical power to the battery unit (12, 12', 12", 12‴) or acquiring electrical power from the battery unit (12, 12', 12", 12‴), and transmit the state parameter information to the determination module (102);
the determination module (102) is configured to determine, based on the received state parameter information, whether the state parameter information complies with a specification in the first communication protocol currently used for communication between the communication control unit (10, 10', 10", 10‴) and the electrical unit (11, 11', 11", 11‴) and/or the battery unit (12, 12', 12", 12‴), determine that communication interference exists on the communication lines (L2, L3) in response to determining that the state parameter information does not comply with the specification in the first communication protocol, and send corresponding interference indication information to the switching module (103);
the switching module (103) is configured to switch, in response to the received interference indication information, the first communication protocol currently used for communication between the communication control unit (10, 10', 10", 10‴) and the electrical unit (11, 11', 11", 11‴) and/or the battery unit (12, 12', 12", 12‴) to the second communication protocol.

8. The communication control unit (10, 10', 10", 10‴) according to claim 7, wherein the determination module (102) is configured to, based on the state parameter information detected by the detection module (101), determine a level of interference occurring on the communication lines (L2, L3) and to send interference indication information to the switching module (103), the interference indication information indicating the level of the interference;
the switching module (103) is configured to, in response to receiving the interference indication information, switch the first communication protocol currently used for communication between the communication control unit (10, 10', 10", 10"') and the electrical unit (11, 11', 11", 11‴) and/or the battery unit (12, 12', 12", 12‴) to another communication protocol corresponding to the level of the interference indicated by the interference indication information; wherein
the communication protocols corresponding to different levels of interference are different.

9. The communication control unit (10, 10', 10", 10‴) according to claim 7 or 8, wherein
the state parameter information is an electrical signal characterizing a magnitude of a voltage and/or a current regarding the electrical unit (11, 11', 11", 11‴) supplying electrical power to the battery unit (12, 12', 12", 12‴) or acquiring electrical power from the battery unit (12, 12', 12", 12‴);
the detection module (101) comprises a sampling circuit, the sampling circuit being configured to collect the electrical signal and send the electrical signal to the determination module (102);
the determination module (102) is configured to issue the interference indication information to the switching module (103) in response to determining that the electrical signal does not comply with a specification in the first communication protocol.

10. The communication control unit (10, 10', 10", 10‴) according to any one of claims 7 to 9, in particular to either claim 7 or 8, wherein
the state parameter information is a value of a first time interval elapsed from a time when the communication control unit (10, 10', 10", 10‴) issues a first communication instruction to the electrical unit (11, 11', 11", 11‴) and/or the battery unit (12, 12', 12", 12‴) to a time when the communication control unit (10, 10', 10", 10‴) receives information of a response to the first communication instruction from the electrical unit (11, 11', 11", 11‴) and/or battery unit (12, 12', 12", 12‴), or a value of a second time interval elapsed from a time after the communication control unit (10, 10', 10", 10‴) issues the first communication instruction to the electrical unit (11, 11', 11", 11‴) and/or the battery unit (12, 12', 12", 12‴) to a time before the communication control unit (10, 10', 10", 10‴) receives information of a response to the first communication instruction from the electrical unit (11, 11', 11", 11‴) and/or battery unit (12, 12', 12", 12‴);
the detection module (101) comprises a timing circuit configured to record the value of the first time interval or the value of the second time interval, and sends the value of the first time interval or the value of the second time interval to the determination module (102);
the determination module (102) is configured to send the interference indication information to the switching module (103) in response to determining that the value of the first time interval or the value of the second time interval value is greater than a predetermined value.

11. The communication control unit (10, 10', 10", 10‴) according to claim 10, wherein
the first communication instruction is an instruction issued by the communication control unit (10, 10', 10", 10‴) to the electrical unit (11, 11', 11", 11‴) and/or the battery unit (12, 12', 12", 12‴) to request for acquisition of a state parameter of the electrical unit (11, 11', 11", 11‴) and/or the battery unit (12, 12', 12", 12‴), or an instruction to transmit a charging or discharging-related parameter to the electrical unit (11, 11', 11", 11‴) and/or the battery unit (12, 12', 12", 12‴).

12. The communication control unit (10, 10', 10", 10‴) according to any one of claims 7 to 11, in particular to either claim 7 or 8, wherein
the determination module (102) is configured to determine, based on the received state parameter information, whether the state parameter information complies with a specification in the first communication protocol corresponding to a current charging phase or discharging phase of the battery unit (12, 12', 12", 12‴), and in response to determining that the state parameter information does not comply with the specification, determine that communication interference exists on the communication lines (L2, L3), and send corresponding interference indication information to the switching module (103).

13. A charging device (20) comprising a charging unit (11') and the communication control unit (10') according to any of claims 1-12, wherein
the charging unit (11') is configured to provide electrical power to a battery unit (12') connected to the charging device (20) based on one of at least two communication protocols provided by the communication control unit (10').

14. An electrical appliance (30), comprising a drive control unit (11") and the communication control unit (10") according to any of claims 1-12, wherein
the drive control unit (11") is configured to acquire electrical power from a battery unit (12") mounted to the electrical appliance (30) based on one of at least two communication protocols provided by the communication control unit (10").

15. A battery device (40) comprising a battery unit (12‴) and the communication control unit (10‴) according to any of claims 1-12, wherein
the battery unit (12‴) is configured to acquire electrical power from a charging device (20‴) or supplies electrical energy to an electrical appliance (20‴) based on one of at least two communication protocols provided by the communication control unit (10‴).
